# EUROPÄISCHE PATENTSCHRIFT

(11) **EP 1 389 565 B1**
(45) Veröffentlichungstag und Bekanntmachung des Hinweises auf die Patenterteilung: **20.12.2006**
(21) Anmeldenummer: 03102436.7
(22) Anmeldetag: 06.08.2003
(51) Int. Cl.: B60R 11/04, B60S 1/08, G07C 5/08

(54) **Kameraanordnung für Kraftfahrzeuge**
Camera arrangement for motor vehicles
Dispositif de caméra pour véhicules motorisés

(30) Priorität: 16.08.2002 DE 10237481
(43) Veröffentlichungstag der Anmeldung: 18.02.2004
(60) Teilanmeldung: 05110590.6
(73) Patentinhaber: Hella KGaA Hueck & Co., 59552 Lippstadt (DE)
(72) Erfinder: Hunecke, Jens, 59505, Bad Sassendorf (DE); Kaphingst, Jens, 54510, Lippetal (DE); Schulte, Michael, 33106, Paderborn (DE); Mühlenberg, Martin, 59494, Soest (DE)

(56) Entgegenhaltungen:
- DE-A- 4 329 983
- DE-C- 19 647 200
- US-B1- 6 170 955

## Beschreibung

Die Erfindung bezieht sich auf eine Kameraanordnung für Kraftfahrzeuge mit einer Kamera, die im Fahrzeuginnenraum hinter einer Scheibe angeordnet ist. Eine derartige gattungsbildende Kameraanordnung ist beispielsweise aus der DE 196 47 200 C1 bekannt. Mit einer solchen Kameraanordnung sind verschiedenste Videoüberwachungen des Fahrzeugaußenraums oder auch eine automatisch Fahrspurerkennung möglich. Der Einsatz von Kameras in Fahrzeugen wird zukünftig zunehmen. Eine weitere Kameraanordnung zeigt die DE 40 16 570 A1.

Ferner werden in Fahrzeugen derzeit verstärkt Regensensoren eingesetzt, die den Niederschlag auf der Windschutzscheibe erfassen und so ein automatisches Scheibenwischen ermöglichen. Ein derartiger Regensensor ist beispielsweise aus der DE 199 55 423 A1 bekannt. Bei einem solchen Regensensor wird infrarote Meßstrahlung von einem Sender über ein optisches Führungselement in die Windschutzscheibe eingekoppelt. Die so eingekoppelte Strahlung wird an der Grenzfläche der Scheibenaußenseite durch Totalreflexion reflektiert und über ein weiteres optisches Führungselement in Richtung auf einen Empfänger gerichtet. Die Totalreflexionsbedingung wird bei Anwesenheit von Niederschlag auf der Scheibe gestört, so daß der Anteil der reflektierten Strahlung und damit das Signal im Empfänger abnimmt, worauf letztendlich das Prinzip dieses Regensensors beruht. Die beiden optischen Führungselemente liegen direkt oder indirekt, z.B. über ein optisches Koppelmedium (z.B. eine Silikonschicht oder eine Klebeschicht) an der Scheibe an, wobei die Scheibe, die optischen Führungselemente und ggf. das optische Koppelmedium zumindest ähnliche Brechungsindizes für die relevante Strahlung aufweisen.

Die Trennung von Kameraanordnung und Regensensor ist sowohl aus Kostengründen als auch konstruktiven Gründen sowie hinsichtlich des zur Verfügung stehenden Bauraums ungünstig.

Aus der US 6,170 ,955 B 1 ist es bekannt, auf die Innenseite der Windschutzscheibe eines Kraftfahrzeuges eine Trägerplatte zu kleben, an der dann eine Kamera befestigt wird. Optische Sensoren, die unabhängig von der Kamera sind, weist diese Anordnung nicht auf.

Aus der DE 43 29 983 A1 ist eine Kameraanordnung bekannt, bei der die Kamera gemeinsam mit optischen Sensoren in einem Dachmodul angeordnet ist, welches am Dach des Fahrzeuges befestigt ist.

Aufgabe der Erfindung ist es, eine alternative Befestigungsmöglichkeit für ein Kameramodul zur Verfügung zu stellen, das neben der Kamera noch mindestens eine von der Kamera unabhängige optische Sensoreinrichtung aufweist.

Diese Aufgabe wird erfindungsgemäß durch die Merkmale des Patentanspruches 1 gelöst. Dabei ist eine Trägerplatte vorgesehen, die an der Innenseite der Scheibe befestigt ist und als Halterung für die Kamera dient, wobei mit der Trägerplatte mindestens ein materiegebundenes optisches Führungselement für eine von der Kamera unabhängige Sensoreinrichtung verbunden ist, das vorzugsweise mit der Trägerplatte bündig abschließt. Diese Trägerplatte mit dem mindestens einen optischen Führungselement wird dann direkt oder über ein optisches Koppelmedium an der Scheibeninnenseite zur Anlage gebracht. Dabei wird erfindungsgemäß an der Scheibe ein Befestigungselement, insbesondere ein Befestigungsring angeklebt, wobei die Trägerplatte für die Kamera über eine an dem Befestigungselement angreifende Feder gegen die Scheibe gedrückt wird.

Anhand der beigefügten Zeichnungen soll die Erfindung nachfolgend näher erläutert werden. Es zeigt:
- Figur 1: eine perspektivische Ansicht einer Trägerplatte für die Kamera mit darin einstückig integrierten optischen Führungselementen für einen Regensensor,
- Figur 2: eine Draufsicht auf die Trägerplatte von Figur 1,
- Figur 3: eine Draufsicht auf die Trägerplatte von Figur 1, jedoch mit Einblick in die trichterförmige Abdeckkappe,
- Figur 4: eine Seitenansicht der an der Scheibeninnenseite angeordneten Trägerplatte mit daran angeformter Abdeckkappe,
- Figur 5: eine perspektivische Ansicht einer Trägerplatte für die Kamera mit darin einstückig integrierten optischen Führungselementen für einen Regensensor, wobei die Anordnung der optischen Führungselemente gegenüber der Trägerplatte von Figur 1 verschieden ist,
- Figur 6: eine Draufsicht auf die Trägerplatte von Figur 5,
- Figur 7: eine perspektivische Ansicht einer Trägerplatte für zwei Kameras mit darin einstückig integrierten optischen Führungselementen für einen Regensensor,

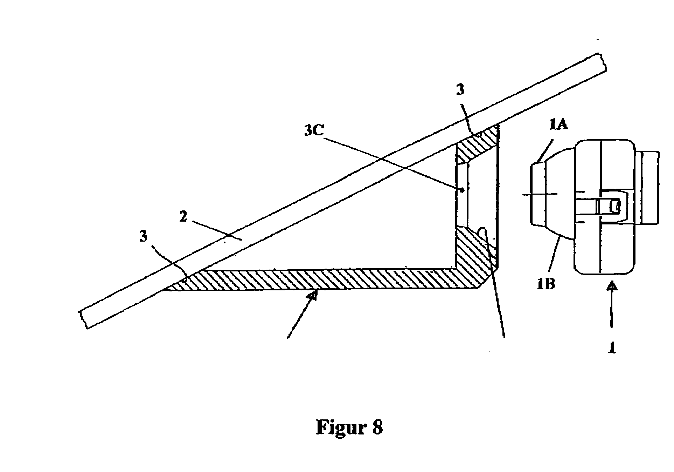

- Figur 8: die Schnittdarstellung einer Trägerplatte mit daran angeformter Abdeckkappe sowie der Kamera in Explosionsdarstellung.

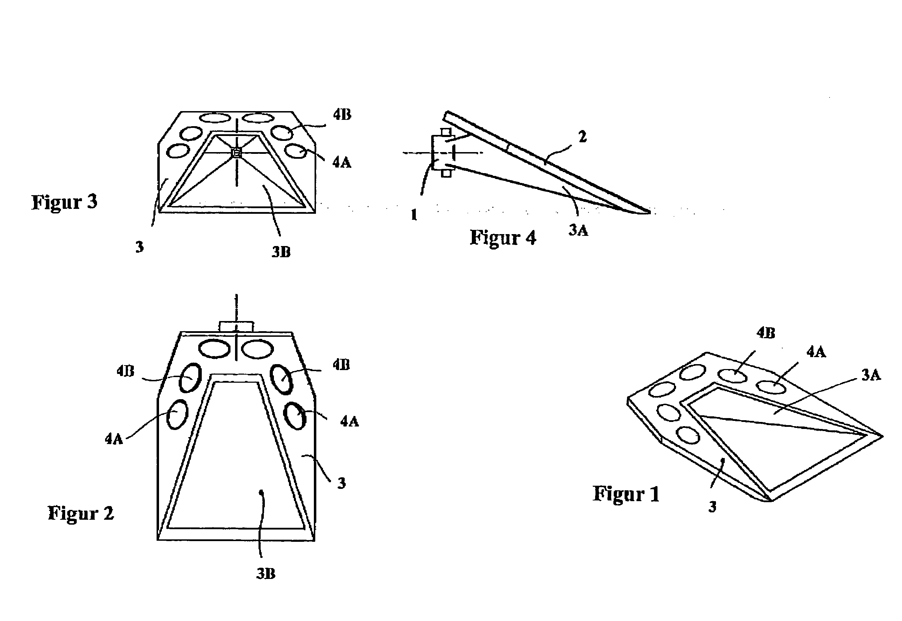

Figur 1 zeigt eine Trägerplatte (3), die als Halterung für die Kamera (1) dient und an der Innenseite der Windschutzscheibe (2) befestigt wird. Zur Halterung der Kamera bzw. des Kameragehäuses (1) ist an der Trägerplatte (3) eine vorzugsweise trichterförmige Abdeckkappe (3A) einstückig angeformt, welche den Raum zwischen Scheibe (2) und Kameraobjektiv (1A) bzw. dem Objektivtubus licht- und staubdicht umschließt. Die Kamera bzw. das Kameragehäuse (1) ist an dem der Scheibe (2) abgewandten Ende der trichterförmigen Abdeckkappe (3A) angeordnet (vgl. Figur 3, 4 und 9). Der in Richtung von der Scheibe (2) weg verjüngt ausgebildete Trichter (3A) definiert damit auch den Lichterfassungsbereich der Kamera (1). Um den Lichteintritt in die trichterförmige Abdeckkappe (3A) zu ermöglichen, weist die Trägerplatte (3) ein Lichteintrittsfenster (3B) auf, wobei die Trägerplatte (3) so an der Scheibe (2) anliegt, daß die Abdeckkappe (3A) im Bereich des Lichteintrittsfensters (3B) von der Scheibe (2) verschlossen wird. An ihrem der Scheibe (2) abgewandten Ende weist die trichterförmige Abdeckkappe (3A) eine Aussparung (3C) zur licht- und staubdichten Aufnahme des Kameraobjektivs bzw. des Objektivtubus (1A) auf.

Die Verbindung zwischen der Abdeckkappe (3A) und der Kamera bzw. dem Kameragehäuse (1) erfolgt über ein Kugelgelenk. Zu diesem Zweck weist die Abdeckkappe (3A) endseitig eine einstückig mit der Abdeckkappe (3A) ausgebildete Gelenkpfanne (3D) auf, während das Kameragehäuse (1) ein entsprechendes Kugelsegment (1B) aufweist. Das Kugelgelenk dient der Justage. In der justierten Stellung werden die Gelenkpfanne (3D) und das Kugelsegment (1B) durch Laserschweißen miteinander verbunden. Dabei liegt das Kugelsegment (1B) im verschweißten Zustand staubdicht an der Gelenkpfanne (3D) an. Besonders vorteilhaft ist, daß der Mittelpunkt des Kugelgelenks auf der optischen Achse des Objektivs (1A) liegt, wodurch eine sehr kompakte Bauweise der Kameraanordnung erzielt wird. Dies wird dadurch erreicht, daß das Objektiv bzw. der Objektivtubus (1A) konzentrisch innerhalb des Kugelsegments (1B) angeordnet ist. Dementsprechend weist die Gelenkpfanne (3D) der Abdeckkappe (3) eine konzentrische lichte Aussparung (3C) für das Objektiv (1A) auf.

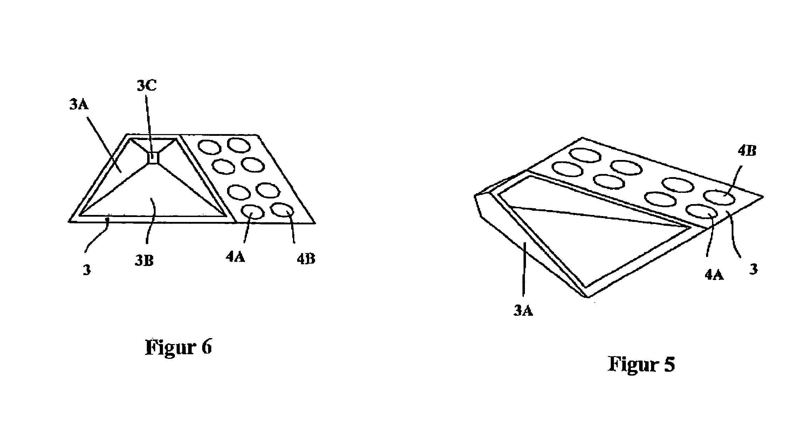

In den Ausführungsformen gemäß Figur 1,2,3, 5, 6 und 7 sind die optischen Führungselemente (4A,4B) einstückig mit der Trägerplatte (3) für die Kamera (1) ausgebildet. Die dargestellten optischen Führungselemente (4A,4B) sind Teil eines Regensensors, der der Niederschlagserfassung auf der Scheibe dient. Dabei sind drei optische FührungselementePaare vorgesehen, wobei jeweils das eine optische Führungselement (4A) einer Paarkombination der Einkopplung von Meßstrahlung aus einem Sender in die Scheibe dient, während das andere optische Führungselement (4B) der Auskopplung der an der Scheibenaußenseite reflektierten Meßstrahlung in Richtung auf einen Empfänger dient. Sender und Empfänger sind nicht dargestellt.

Erfindungsgemäß schließen die optischen Führungselemente (4A,4B) auf der einen Seite bündig mit der Trägerplatte (3) ab, damit diese mit den optischen Führungselementen direkt oder indirekt über ein optisches Koppelmedium (nicht dargestellt) an der Scheibeninnenseite zur Anlage gebracht werden kann. Auf der der Scheibe (2) abgewandten Seite weisen die optischen Führungselemente (4A,4B) eine Krümmung (nicht dargestellt) zur Ausbildung einer Linse auf.

Die optischen Führungselemente (4A,4B) werden vorzugsweise in einem Zweikomponeten-Spritzgießverfahren einstückig mit der Trägerplatte (3) hergestellt, wobei die Trägerplatte aus einem für sichtbare Strahlung und für die Meßstrahlung undurchlässigen Kunststoftmaterial hergestellt wird, während die optischen Führungselemente aus einem für die Meßstrahlung transparenten Kunststofrmaterial hergestellt sind. Im Fall des Regensensors wird infrarotes Licht als Meßstrahlung verwendet. Die an der Trägerplatte (3), vorzugsweise im Spritzgießverfahren, angeformte Abdeckkappe (3A) besteht - wie die Trägerplatte selbst - aus einem für sichtbares Licht undurchlässigen Kunststoffinaterial, so daß der Raum zwischen Scheibe (2) und Kameraobjektiv (1A) lichtdicht umschlossen wird.

In einer nicht dargestellten Ausführungsform weist die Trägerplatte mindestens ein optisches Führungselement auf, das Teil eines Vorfeld- und/oder Umgebungslichtsensors zur automatischen Fahrlichtschaltung ist, wobei das optische Führungselement das Vorfeld- und/oder Umgebungslicht auf einen zugeordneten Empfänger richtet.

In einer nicht dargestellten Ausführungsform sind die optischen Führungselemente nicht einstückig mit der Trägerplatte ausgebildet. In dieser Ausführungsform ist das mindestens eine optische Führungselement über ein Verbindungsmittel, insbesondere über eine Rastverbindung, mit der Trägerplatte für die Kamera verbunden. Zu diesem Zweck ist das mindestens eine optische Führungselement Teil einer zweiten Trägerplatte, die dann über ein Verbindungsmittel mit der Trägerplatte für die Kamera verbunden wird.

Die Befestigung der Trägerplatte (3) an der Scheibe (2) erfolgt über einen Befestigungsring (nicht dargestellt), der an die Scheibe (2) geklebt ist, wobei die Trägerplatte (3) für die Kamera (1) über eine an dem Befestigungsring angreifende Feder gegen die Scheibe gedrückt wird. Dabei kann zwischen Scheibe und Trägerplatte/Führungselementen noch ein für die Meßstrahlung transparentes Koppelmedium, z.B. eine Silikonschicht, angeordnet sein.

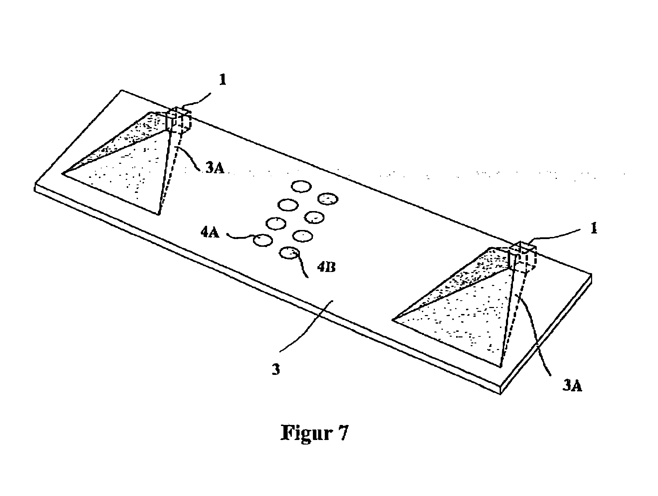

In Figur 7 ist eine Trägerplatte (3) gezeigt, an der zwei Abdeckkappen (3A) für jeweils eine Kamera (1) angeordnet sind. Die optischen Führungselemente (4A,4B) sind zwischen den beiden Lichteintrittsfenstern (3B) der Abdeckkappen (3A) angeordnet.

Die optischen Führungselemente können grundsätzlich beliebig auf der Trägerplatte um das Lichteintrittsfenster herum angeordnet sein, und zwar sowohl um das Lichteintrittsfenster herum als auch nur auf einer Seite davon.

Die Kamera umfasst mindestens ein Objektiv und einen lichtempfindlichen Halbleiterchip.

In einer nicht dargestellten Ausführungsform weist die Trägerplatte randseitig einen gegenüber der Grundfläche - in der die optischen Führungselemente bündig angeordnet sind - hervorstehenden, umlaufenden Kragen auf, der als Begrenzungsrahmen für eine aushärtende Vergussmasse dient, welche das Koppelmedium ausbildet.

### Bezugszeichenliste:

1) Kamera
   1A) Kameraobjektiv
   1B) Kugelsegment auf der Kamera
2) Scheibe
3) Trägerplatte
   3A) Abdeckkappe
   3B) Lichteintrittsfenster in der Trägerplatte
   3C) Aussparung in der trichterförmigen Abdeckkappe zur Aufnahme des Kameraobjektivs 4A, 4B) Optische Führungselemente in der Trägerplatte

## Patentansprüche

1. Kameraanordnung für Kraftfahrzeuge mit einer Kamera (1), die im Fahrzeuginnenraum hinter einer Scheibe (2) angeordnet ist, wobei eine Trägerplatte (3) vorgesehen ist, die an der Innenseite der Scheibe (2) befestigt ist und als Halterung für die Kamera (1) dient, wobei
- mit der Trägerplatte (3) mindestens ein optisches Führungselement (4A,4B) für eine von der Kamera (1) unabhängige Sensoreinrichtung verbunden ist,
- die Trägerplatte (3) mit dem mindestens einen optischen Führungselement (4A,4B) direkt oder indirekt über ein optisches Koppelmedium an der Scheibeninnenseite anliegt, **dadurch gekennzeichnet, dass**
- an der Scheibe (2) ein Befestigungselement, insbesondere ein Befestigungsring angeklebt ist, wobei die Trägerplatte (3) für die Kamera (1) über eine an dem Befestigungselement angreifende Feder gegen die Scheibe (2) gedrückt wird.

2. Kameraanordnung nach Anspruch 1,
**dadurch gekennzeichnet, dass**
das optische Führungselement (4A,4B) bündig mit der Trägerplatte (3) abschließt.

3. Kameraanordnung nach Anspruch 1 oder 2,
**dadurch gekennzeichnet, dass**
das mindestens eine optische Führungselement (4A,4B) einstückig mit der Trägerplatte (3) für die Kamera (1) ausgebildet ist.

4. Kameraanordnung nach Anspruch 1 oder 2,
**dadurch gekennzeichnet, dass**
das mindestens eine optische Führungselement (4A,4B) über ein Verbindungselement, insbesondere eine Rastverbindung, mit der Trägerplatte (3) für die Kamera (1) verbunden ist.

5. Kameraanordnung nach Anspruch 4,
**dadurch gekennzeichnet, dass**
das mindestens eine optische Führungselement (4A,4B) Teil einer zweiten Trägerplatte ist,
die über ein Verbindungselement, insbesondere eine Rastverbindung, mit der Trägerplatte (3) für die Kamera (1) verbunden ist.

6. Kameraanordnung nach einem der vorstehenden Ansprüche,
**dadurch gekennzeichnet, dass**
- an der Trägerplatte (3) eine Abdeckkappe (3A) angeformt ist, welche den Raum zwischen Scheibe (2) und Kameraobjektiv (1A) licht- und staubdicht umschließt, wobei die Kamera (1) an dem der Scheibe (2) abgewandten Ende der Abdeckkappe (3A) angeordnet ist,
- die Trägerplatte (3) ein Lichteintrittsfenster (3B) aufweist,
- die Trägerplatte (3) so an der Scheibe (2) anliegt, dass die Abdeckkappe (3A) im Bereich des Lichteintrittsfensters (3B) von der Scheibe (2) verschlossen wird.

7. Kameraanordnung nach Anspruch 6,
**dadurch gekennzeichnet, dass**
die Abdeckkappe (3A) in Form eines Trichters ausgebildet ist, der in Richtung von der Scheibe weg verjüngt ausgebildet ist.

8. Kameraanordnung nach Anspruch 6 oder 7,
**dadurch gekennzeichnet, dass**
die Abdeckkappe (3A) an ihrem der Scheibe abgewandten Ende eine Aussparung (3C) zur licht- und staubdichten Aufnahme des Kameraobjektivs (1A) aufweist.

9. Kameraanordnung nach einem der vorstehenden Ansprüche,
**dadurch gekennzeichnet, dass**
das mindestens eine optische Führungselement (4A,4B) Teil eines Regensensors zur Niederschlagserfassung auf der Scheibe ist.

10. Kameraanordnung nach Anspruch 9,
**dadurch gekennzeichnet, dass**
wenigstens ein optisches Führungselemente-Paar (4A,4B) vorgesehen ist, wobei das eine optische Führungselement (4A) der Einkopplung von Meßstrahlung aus einem Sender in die Scheibe (2) dient, während das andere optische Führungselement (4B) der Auskopplung der an der Scheibenaußenseite reflektierten Meßstrahlung in Richtung auf einen Empfänger dient.

11. Kameraanordnung nach einem der vorstehenden Ansprüche,
**dadurch gekennzeichnet, dass**
das mindestens eine optische Führungselement (4A,4B) Teil eines Vorfeld- und/oder Umgebungslichtsensors zur automatischen Fahrlichtschaltung ist, wobei das mindestens eine optische Führungselement das Vorfeld- und/oder Umgebungslicht auf einen zugeordneten Empfänger richtet.

12. Kameraanordnung nach einem der vorstehenden Ansprüche,
**dadurch gekennzeichnet, dass**
die Trägerplatte (3) für die Kamera (1) bis auf das mindestens eine optische Führungselement (4A,4B) aus einem nicht transparenten Material besteht.

13. Kameraanordnung nach Anspruch 12,
**dadurch gekennzeichnet, dass**
die Trägerplatte (3) aus einem für sichtbares Licht nicht transparenten Material besteht.

14. Kameraanordnung nach Anspruch 12 oder 13,
**dadurch gekennzeichnet, dass**
die Trägerplatte (3) aus einem für infrarotes Licht nicht transparenten Material besteht.

## Claims

1. Camera arrangement for motor vehicles, comprising a camera (1) arranged in the vehicle interior behind a pane or windshield (2), a support plate (3) being fixed to the inside of the pane or windshield (2) and serving as a mounting for the camera (1),
- at least one optical guide element (4A, 4B) for a sensor arrangement independent of the camera (1) being connected to the support plate (3),
- and the support plate (3) resting directly or indirectly via an optical coupling medium against the inside of the pane or windshield,
**characterised in that**
- a fixing element, in particular a fixing ring, is bonded to the pane or windshield (2), the support plate (3) for the camera (1) being pressed against the pane or windshield (2) by means of a spring engaging against the fixing element.

2. Camera arrangement according to claim 1, **characterised in that** the optical guide element (4A, 4B) ends flush with the support plate (3).

3. Camera arrangement according to claim 1 or 2, **characterised in that** the at least one optical guide element (4A, 4B) is formed in one piece with the support plate (3) for the camera (1).

4. Camera arrangement according to claim 1 or 2, **characterised in that** the at least one optical guide element (4A, 4B) is connected to the support plate (3) for the camera (1) via a connecting element, in particular a locking connection.

5. Camera arrangement according to claim 4, **characterised in that** the at least one optical guide element (4A, 4B) forms part of a second support plate which is connected to the support plate (3) for the camera (1) via a connecting element, in particular a locking connection.

6. Camera arrangement according to any one of the preceding claims,
**characterised in that**
- a cover (3A) which encloses the space between the pane or windshield (2) and the camera lens (1A) in a light- and dust-excluding manner is formed on the support plate (3), the camera (1) being arranged at the end of the cover (3A) which faces away from the pane or windshield (2),
- the support plate (3) includes a light entry window (3B),
- the support plate (3) rests against the pane or windshield (2) in such a way that the cover (3A) is occluded by the pane or windshield (2) in the region of the light entry window (3B).

7. Camera arrangement according to claim 6, **characterised in that** the cover (3A) is configured in the shape of a funnel which tapers inwards in the direction way from the pane or windshield.

8. Camera arrangement according to claim 6 or 7, **characterised in that** the cover (3A) includes at its end facing away from the pane or windshield an opening (3C) for receiving the camera lens (1A) in a light- and dust-excluding manner.

9. Camera arrangement according to any one of the preceding claims, **characterised in that** the at least one optical guide element (4A, 4B) forms part of a rain sensor for detecting the precipitation of rain on the pane or windshield.

10. Camera arrangement according to claim 9, **characterised in that** at least one pair of optical guide elements (4A, 4B) is provided, one optical guide element (4A) being used for coupling into the pane or windshield (2) measurement radiation from a transmitter while the other optical guide element (4B) is used for coupling out towards a receiver the measurement radiation reflected from the outside of the pane or windshield.

11. Camera arrangement according to any one of the preceding claims, **characterised in that** the at least one optical guide element (4A, 4B) forms part of a light sensor for sensing light from the roadway ahead of the vehicle and/or ambient light for automatic switching of the headlights, the at least one optical guide element directing to an associated receiver the light from the roadway ahead of the vehicle and/or the ambient light.

12. Camera arrangement according to any one of the preceding claims, **characterised in that** the support plate (3) for the camera (1) is made of a non-transparent material, apart from the at least one optical guide element (4A, 4B).

13. Camera arrangement according to claim 12, **characterised in that** the support plate (3) is made of a material which is non-transparent to visible light.

14. Camera arrangement according to claim 12 or 13, **characterised in that** the support plate (3) is made of a material which is non-transparent to infrared light.

## Revendications

1. Agencement de caméra pour véhicules, comportant une caméra (1) qui est agencée dans l'habitacle de véhicule derrière une vitre (2), dans lequel est prévue une plaque de support (3) qui est fixée sur la face intérieure de la vitre (2) et qui sert de monture pour la caméra (1), dans lequel
- au moins un élément de guidage optique (4A, 4B) pour un système de capteur indépendant de la caméra (1) est relié à la plaque de support (3),
- la plaque de support (3), avec ledit au moins un élément de guidage optique (4A, 4B), est en appui sur la face intérieure de la vitre directement ou indirectement via un moyen de couplage optique,
**caractérisé en ce que**
sur la vitre (2) est collé un élément de fixation, en particulier une bague de fixation, la plaque de support (3) pour la caméra (1) étant pressée contre la vitre (2) via un ressort attaquant sur l'élément de fixation.

2. Agencement de caméra selon la revendication 1,
**caractérisé en ce que**
l'élément de guidage optique (4A, 4B) se termine en affleurement avec la plaque de support (3).

3. Agencement de caméra selon l'une des revendications 1 ou 2,
**caractérisé en ce que**
ledit au moins un élément de guidage optique (4A, 4B) est réalisé d'une seule pièce avec la plaque de support (3) de la caméra (1).

4. Agencement de caméra selon l'une des revendications 1 ou 2,
**caractérisé en ce que**
ledit au moins élément de guidage optique (4A, 4B) est relié à la plaque de support (3) pour la caméra (1) via un élément de liaison, en particulier par une liaison par enclenchement.

5. Agencement de caméra selon la revendication 4,
**caractérisé en ce que**
ledit au moins élément de guidage optique (4A, 4B) fait partie d'une deuxième plaque de support qui est reliée à la plaque de support (3) pour la caméra (1) via un élément de liaison, en particulier par une liaison par enclenchement.

6. Agencement de caméra selon l'une des revendications précédentes,
**caractérisé en ce que**
- sur la plaque de support (3) est conformé un couvercle (3A) qui entoure l'espace entre la vitre (2) et l'objectif de caméra (1A) de manière étanche à la lumière et à la poussière, la caméra (1) étant agencée à l'extrémité du couvercle (3A) qui est détournée de la vitre (2),
- la plaque de support (3) présente une fenêtre d'entrée de lumière (3B),
- la plaque de support (3) est en appui sur la vitre (2) de telle sorte que le couvercle (3A) est fermé par la vitre (2) dans la région de la fenêtre d'entrée de lumière (3B).

7. Agencement de caméra selon la revendication 6,
**caractérisé en ce que**
le couvercle (3A) est réalisé en forme d'un entonnoir qui est réalisé en se rétrécissant en direction d'éloignement de la vitre.

8. Agencement de caméra selon la revendication 6 ou 7,
**caractérisé en ce que**
le couvercle (3A) présente à son extrémité détournée de la vitre un évidement (3C) pour recevoir l'objectif de caméra (1A) de manière étanche à la lumière et à la poussière.

9. Agencement de caméra selon l'une des revendications précédentes,
**caractérisé en ce que**
ledit au moins élément de guidage optique (4A, 4B) fait partie d'un capteur de pluie pour détecter les précipitations sur la vitre.

10. Agencement de caméra selon la revendication 9,
**caractérisé en ce que**
il est prévu au moins une paire d'éléments de guidage optique (4A, 4B), ledit un élément de guidage optique (4A) servant au couplage dans la vitre (2) de rayonnement de mesure provenant d'un émetteur, tandis que l'autre élément de guidage optique (4B) sert à découpler le rayonnement de mesure réfléchi sur la face extérieure de la vitre en direction d'un récepteur.

11. Agencement de caméra selon l'une des revendications précédentes,
**caractérisé en ce que**
ledit au moins un élément de guidage optique (4A, 4B) fait partie d'un capteur de lumière d'avant-plan ou d'environnement pour allumer automatiquement les feux de route, ledit au moins un élément de guidage optique dirigeant la lumière d'avant-plan ou d'environnement sur un récepteur associé.

12. Agencement de caméra selon l'une des revendications précédentes,
**caractérisé en ce que**
la plaque de support (3) pour la caméra (1), à l'exception dudit au moins un élément de guidage optique (4A, 4B) est en matériau non transparent.

13. Agencement de caméra selon la revendication 12,
**caractérisé en ce que**
la plaque de support (3) est en un matériau non transparent pour la lumière visible.

14. Agencement de caméra selon la revendication 12 ou 13,
**caractérisé en ce que**
la plaque de support (3) est en un matériau non transparent pour la lumière à infrarouge.
